**Europäisches Patentamt**

(19) **European Patent Office**

**Office européen des brevets**

(11) Veröffentlichungsnummer: **0 182 995**
**B1**

(12) **EUROPÄISCHE PATENTSCHRIFT**

(45) Veröffentlichungstag der Patentschrift:
09.03.88

(51) Int. Cl.⁴: **C 08 L 71/04, C 08 L 25/10**

(21) Anmeldenummer: **85111846.3**

(22) Anmeldetag: **19.09.85**

(54) Thermoplastische Massen auf Basis von Polyphenylenethern und Styrol-Butadien-Emulsionspolymerisaten.

(30) Priorität: **20.11.84 DE 3442274**

(43) Veröffentlichungstag der Anmeldung:
**04.06.86 Patentblatt 86/23**

(45) Bekanntmachung des Hinweises auf die Patenterteilung:
**09.03.88 Patentblatt 88/10**

(84) Benannte Vertragsstaaten:
**AT BE CH DE FR GB IT LI NL SE**

(56) Entgegenhaltungen:
**DE - A - 2 418 763**

(73) Patentinhaber: **HÜLS AKTIENGESELLSCHAFT,
Patentabteilung / PB 15 - Postfach 13 20,
D-4370 Marl 1 (DE)**

(72) Erfinder: **Jadamus, Hans, Dr., Hervesterstrasse 8,
D-4370 Marl (DE)**
Erfinder: **Ribbing, Wilfried, Dr., Heesternweg 20,
D-4270 Dorsten 12 (DE)**
Erfinder: **Feinauer, Roland, Dr., Flämingstrasse 34,
D-4370 Marl (DE)**

## Beschreibung

Polyphenylenether, auch Polyphenylenoxide genannt, sind Polymere mit guten thermischen und elektrischen Eigenschaften. Technische Bedeutung hat insbesondere Poly-(2,6-dimethyl-1,4-phenylenether) (PPE) als Bestandteil thermoplastischer Formmassen erlangt. Reine Polyphenylenether sind aufgrund der hohen Schmelzviskosität nur schwierig zu verarbeiten. Die aus ihnen hergestellten Formkörper weisen hohe Wärmeformbeständigkeit auf. Allerdings sind diese, insbesondere im Bereich äusserer Kerben, wenig schlagzäh.

Es sind zahlreiche Vorschläge gemacht worden, um die Verarbeitbarkeit und die Kerbschlagzähigkeit der Formmassen zu verbessern (vgl. DE-C-16 94 255 entsprechend US-A-3 361 851, DE-C-16 94 257 entsprechend US-A-3 383 435 und DE-C-16 94 290 entsprechend US-A-3 379 792). Doch hat sich gezeigt, dass der alleinige Zusatz von Polyolefinen, Polystyrolen bzw. Polyamiden das Eigenschaftsbild von PPE-haltigen Formmassen noch nicht in optimaler Weise beeinflusst.

Grössere technische Bedeutung haben Abmischungen von Polyphenylenethern mit schlagzähen Polystyrolen erlangt (vgl. DE-C-22 11 005). Die in der DE-C 21 19 301 beanspruchten thermoplastischen Massen bestehen aus Polyphenylenethern und einem kautschukmodifizierten Polystyrol und/oder einem Polystyrol und einem Kautschuk. Für Massen, bei denen der mittlere Teilchendurchmesser der dispergierten elastomeren Phase unter maximal etwa 2 µm liegt, werden höhere Schlagzähigkeiten geltend gemacht.

Von erheblicher wirtschaftlicher Bedeutung sind Polymermischungen auf Basis von Polyphenylenethern, die sich durch ein bestimmtes Mass an Kerbschlagzähigkeit und Wärmeformbeständigkeit auszeichnen. Im Prinzip lassen sich derartige Mischungen aus Polyphenylenethern und schlagfesten Styrolpolymerisaten mit unterschiedlichen Kautschukgehalten herstellen. Dieser Weg ist aber aufwendig, da zahlreiche Polystyroltypen bereit gehalten werden müssen, um die jeweils gewünschten Qualitäten einstellen zu können.

Eine nachträgliche Einarbeitung von Kautschuk in Polystyrol ist zwar technisch möglich, doch ist zu berücksichtigen, dass der Kautschuk, der üblicherweise in Ballenform vorliegt, schwer handhabbar ist.

Man kann diesen Nachteil dadurch überwinden, dass man anstelle eines Kautschuks ein sogenanntes Interpolymeres einsetzt. So wird beispielsweise in der DE-B-22 58 896 die Verwendung eines Interpolymeren vorgeschlagen, das ein Pfropfcopolymeres aus 30 bis 70 Gewichtsteilen eines Diengummis und 70 bis 30 Gewichtsteilen einer vinylaromatischen Verbindung oder eines Alkylacrylatesters darstellt. Unterschiedliche Qualitäten thermoplastischer Massen können nach diesem Verfahren nur nach vorheriger massgeschneiderter Synthese eines speziellen Interpolymeren hergestellt werden.

Es wäre einfacher, könnte man unterschiedliche Typen durch Abmischen von wenigen Ausgangskomponenten herstellen.

Es ist bekannt, dass die Schlagzähigkeit von thermoplastischen Massen auf Basis von Polyphenylenethern durch Zusatz von E-SBR-Kautschuken erhöht werden kann (siehe Vergleichsbeispiele C und G).

Zusätze von Styrol-Butadien-Emulsionspolymerisaten mit einem Styrolanteil über 80 Gewichtsprozent haben dagegen praktisch keine Auswirkung auf die Schlagzähigkeit PPE-haltiger thermoplastischer Massen (siehe Vergleichsbeispiele A, B und F).

Ein Ziel der vorliegenden Erfindung war es, thermoplastische Massen auf Basis von Polyphenylenethern und E-SBR-Kautschuken mit verbesserter Schlagzähigkeit bereitzustellen.

Es wurde jetzt überraschend gefunden, dass die Schlagzähigkeit thermoplastischer Massen auf Basis von Polyphenylenethern und E-SBR-Kautschuken durch den Zusatz von an sich unwirksamen Styrol-Butadien-Emulsionspolymerisaten mit einem Styrolanteil von 80 bis 95 Gewichtsprozent erhöht wird (siehe Beispiele 11 bis 17).

Gegenstand der vorliegenden Erfindung sind die thermoplastischen Massen nach den Ansprüchen 1 bis 7 sowie das Verfahren zu ihrer Herstellung gemäss Anspruch 8.

Unter thermoplastischen Massen sollen im Rahmen dieser Erfindung ungeformte Mischungen angesehen werden, die sich durch thermoplastische Verarbeitung zu Formteilen oder zu Halbzeug verarbeiten lassen. Die thermoplastischen Massen können beispielsweise als Granulat vorliegen.

Bevorzugt werden thermoplastische Massen, die 25 bis 90 Massenteile Komponente A, 0 bis 70 Massenteile Komponente B, 6 bis 12 Massenteile Komponente C und 6 bis 12 Massenteile Komponente D enthalten.

Als Polyphenylenether A kommen in erster Linie Polyether auf Basis von 2,6-Dimethylphenol in Frage, wobei der Ethersauerstoff der einen Einheit an den Benzolkern der benachbarten Einheit gebunden ist. Dabei sollen mindestens 50 Einheiten miteinander verknüpft sein.

Grundsätzlich kommen auch andere o,o'-Dialkylphenole in Frage, deren Alkylrest vorzugsweise höchstens 6 C-Atome besitzt, sofern sichergestellt ist, dass dieser kein α-ständiges tertiäres C-Atom aufweist. Jedes der aufgeführten monomeren Phenole kann in 3-Stellung, gegebenenfalls auch in 5-Stellung, durch eine Methylgruppe substituiert sein. Selbstverständlich können auch Gemische der hier erwähnten monomeren Phenole eingesetzt werden.

Die Polyphenylenether können z. B. in Gegenwart von komplexbildenden Mitteln, wie Kupferbromid und Morpholin, aus den Phenolen hergestellt werden (vgl. DE-A-32 24 692 und DE-A-32 24 691). Die Viskositätszahlen, bestimmt nach DIN 53 728 in Chloroform bei 25° C, liegen im Bereich von 35 bis 80 ml/g. Bevorzugt ist das Polymere des 2,6-Dimethylphenols, der Poly-(2,6-dimethyl-1,4-phenylenether) mit einer Viskositätszahl von 40 bis 65 ml/g.

Die Polyphenylenether werden üblicherweise als Pulver oder Granulate eingesetzt.

Als Komponente B können Styrolhomopolymerisate und/oder schlagzähe Styrolpolymerisate mit einem mittleren Durchmesser der Teilchen in der elastomeren Gelphase zwischen 1 und 5 μm eingesetzt werden.

Die Styrolhomopolymerisate werden in bekannter Weise aus Styrol durch radikalische Masse- oder Suspensionspolymerisation hergestellt. Ihre Molekularmassen liegen zwischen 150 000 und 300 000 (vgl. Kunststoff-Handbuch, Band V, Polystyrol, Carl Hanser Verlag München, 1969, und Ullmanns Encyclopädie der technischen Chemie, 4. Auflage, Band 19, Verlag Chemie, Weinheim 1980).

Die schlagzähen Styrolpolymerisate werden in bekannter Weise erhalten, indem styrolische Lösungen von Poly-cis-butadien in Masse, in Lösung oder in wässeriger Dispersion polymerisiert werden. Bei dem sogenannten gemischten Verfahren wird die styrolische Kautschuklösung in Masse vorpolymerisiert und in wässeriger Dispersion zu Ende polymerisiert (siehe beispielsweise US-A-2 694 692 und US-A-2 862 906).

Die Einstellung der Teilchengrösse der Weichphase erfolgt in an sich bekannter Weise in der Stufe der Vorpolymerisation vor der sogenannten Phasenumkehr. Gegebenenfalls kann auch in Gegenwart der bekannten Kettenregler und/oder radikalischer Initiatoren gearbeitet werden. Einzelheiten, wie z. B. der Zusammenhang zwischen der Rührgeschwindigkeit und der Grösse und Verteilung der Kautschukteilchen im resultierenden schlagfesten Polymerisat sind dem Fachmann bekannt (siehe z. B. Freeguard Brit. Polym. J. *6*, 203-228 [1974]).

Der Durchmesser der Teilchen in der elastomeren Gelphase liegt unter 10 μm, vorzugsweise unter 3,5 μm. Der mittlere Durchmesser (Volumenmittel) liegt im Bereich zwischen 1 und 5 μm.

Die mittlere Teilchengrösse (Volumenanteil) wird bestimmt durch Ausmessen und Mitteln der Durchmesser von flächengleichen Kreisen (Äquivalentdurchmesser) der Teilchen aus elektronenmikroskopischen Dünnschicht-Aufnahmen.

Mit den Volumina der Teilchen (3. Potenz des Äquivalentdurchmessers) wird die Verteilungskurve und daraus das Volumenmittel errechnet. Für die Auswertung sollen mindestens 2000 Teilchen herangezogen werden.

Der E-SBR-Kautschuk C enthält 15 bis 40 Gewichtsprozent Styrol und 85 bis 60 Gewichtsprozent Butadien. Seine Mooney-Viskosität ML (1+4) 100°C liegt zwischen 30 und 130 (vgl. Mooney, Rubber Chem. Techn. *30*, 460 [1957]). Der Kautschuk wird durch Polymerisation in Emulsion hergestellt.

Im Rahmen dieser Erfindung verwendet man vorzugsweise entweder Polymermischungen aus den Komponenten C und D oder einen pulverförmigen, füllstoffhaltigen Kautschuk, der in der Regel auch nach Lagerung noch rieselfähig ist. Der mittlere Durchmesser der Teilchen (Volumenmittel) soll unter 1 mm liegen, andererseits sollen die Teilchen vorzugsweise nicht so klein sein, dass es bei Mischungsvorgängen zu starker Staubentwicklung kommt.

Es handelt sich um einen Kautschuk auf Basis von Styrol und Butadien, der durch Polymerisation in Emulsion hergestellt wurde und kurz als E-SBR-Kautschuk bezeichnet wird. Er enthält 15 bis 40 Gewichtsprozent Styrol und 85 bis 60 Gewichtsprozent Butadien. Der Massenanteil des pulverförmigen, füllstoffhaltigen Kautschuks in den thermoplastischen Massen liegt zwischen 0,5 und 50, vorzugsweise zwischen 10 und 25%.

Es gibt eine Reihe unterschiedlicher Verfahren zur Herstellung pulverförmiger, füllstoffhaltiger Kautschuke. Viele Prozesse sind jedoch so langwierig und umständlich, dass sie keine praktische Bedeutung erlangt haben. In jüngster Zeit wurde erstmalig ein Verfahren in die industrielle Praxis überführt, das in der DE-A-28 22 148 beschrieben ist. Dieses Verfahren zeichnet sich dadurch aus, dass man die Kautschukkomponente in gelöster Form mit einer wässerigen Füllstoff-Suspension vereinigt, die ein wasserlösliches Aluminiumsalz und Wasserglas enthält. Entscheidend ist, dass nicht nur die wässerige Füllstoff-Dispersion einen pH-Wert von 3,0 bis 3,7 aufweisen soll, sondern dass man bei der Vereinigung dieser Dispersion mit der Kautschukkomponente soviel Mineralsäure zusetzen soll, dass in der erhaltenen Mischung ebenfalls dieser pH-Bereich eingehalten wird.

Als Füllstoffe des Kautschuks kommen insbesondere Silikate, vorzugsweise aber Russ, in Frage. Auch Mischungen von Füllstoffen sind möglich. Bezüglich weiterer Einzelheiten wird auf die DE-A-28 22 148 verwiesen. Der Massenanteil des Füllstoffs im eingesetzten pulverförmigen, füllstoffhaltigen SBR-Kautschuk liegt zwischen 10 und 80, vorzugsweise zwischen 30 und 60%.

Pulverförmige, füllstoffhaltige Kautschuke, die nach dem Verfahren der DE-A-28 22 148 hergestellt wurden, werden im Rahmen dieser Erfindung bevorzugt eingesetzt.

Das Styrol-Butadien-Polymerisat E-SB (Komponente D) enthält 80 bis 95 Gewichtsprozent Styrol und 5 bis 20 Gewichtsprozent Butadien. Seine Molekularmasse liegt zwischen 100 000 und 250 000. Auch dieses Produkt wird durch Polymerisation in Emulsion hergestellt.

Die erfindungsgemässen thermoplastischen Massen können als Komponente E einen Flammschutz sowie weitere Zusatzstoffe, wie Pigmente, Oligomere, Antistatika, Stabilisatoren und Verarbeitungshilfsmittel sowie Verstärkungsmittel, enthalten. Bezogen auf die gesamte Formmasse, beträgt der Anteil der Verstärkungsmittel bis zu 50, der der Flammschutzmittel bis zu 15% und der aller übrigen Zusatzstoffe insgesamt bis zu 5%.

Als Flammschutzmittel sind besonders aromatische Phosphorverbindungen, wie Triphenylphosphinoxid und Triphenylphosphat, geeignet. Man kann auch ein übliches halogenhaltiges Flammschutzmittel verwenden. In Frage kommen dabei Halogen enthaltende organische Verbindungen, wie sie z. B. in der Monographie von H. Vogel «Flammenfestmachen von Kunststoff», Hüthig-Verlag, 1966, auf den Seiten 94 bis 102 beschrieben wird. Es kann sich dabei aber auch um halogenierte Polymere, wie z. B. halogenierte Polyphenylenether (siehe DE-A-33 34 068) oder bromierte Oligo- bzw. Polystyrole, handeln. Die Verbindungen sollen mehr als 30 Gewichtsprozent Halogen enthalten.

Im Falle des Einsatzes der halogenhaltigen Flammschutzmittel empfiehlt es sich, einen Synergisten zu verwenden. Geeignet sind Verbindungen des Antimons, Bors und des Zinns. Diese werden im allgemeinen in Mengen von 0,5 bis 10 Gewichtsprozent, bezogen auf die thermoplastischen Massen, eingesetzt.

Als Verstärkungsmittel eignen sich insbesondere Glas- und Kohlenstoffasern.

Geeignete Stabilisatoren umfassen organische Phosphite, wie z. B. Didecylphenylphosphit und Trilaurylphosphit, sterisch gehinderte Phenole sowie Tetramethylpiperidin-, Benzophenon- und Triazolderivate.

Als Verarbeitungshilfsmittel eignen sich Wachse, wie z. B. oxidierte Kohlenwasserstoffe sowie ihre Alkali- und Erdalkalisalze.

Vorzugsweise werden die erfindungsgemässen Formmassen durch Vermischung der Komponenten im geschmolzenen Zustand hergestellt. Man schmilzt zumindest eine Komponente auf und vermischt die erhaltene Schmelze mit den übrigen Komponenten. Eine andere Möglichkeit besteht darin, alle Komponenten gemeinsam aufzuschmelzen und zu vermischen.

Vorzugsweise werden Schmelztemperaturen von 250 bis 350°C, insbesondere von 250 bis 300°C, und Verweilzeiten von 0,3 bis 10 Minuten, insbesondere von 0,5 bis 3 Minuten, angewendet.

Für das Schmelzen und Vermischen eignen sich übliche Geräte zur Behandlung von hochviskosen Schmelzen, sowohl im absatzweisen als auch im kontinuierlichen Betrieb. Besonders geeignet sind Doppelschneckenkneter und Kokneter.

Es ist aber auch möglich, die erfindungsgemässen Formmassen statt durch Compoundieren auf andere Weise, z. B. durch Fällen aus dem Lösungsgemisch der Komponenten, herzustellen. Als gemeinsames Lösemittel eignet sich z. B. Toluol, als Fällungsmittel z. B. Methanol. Das Polymerengemisch kann auch durch Verdampfen des Lösemittels z. B. nach DE-A-33 37 629 gewonnen werden.

Die Formmassen lassen sich mit den für die Thermoplastverarbeitung üblichen Verfahren, wie z. B. Spritzgiessen und Extrusion, zu Formkörpern verarbeiten. Beispiele für technische Anwendungsgebiete sind Rohre, Platten, Gehäuse und sonstige technische Artikel für den Automobil-, Elektro- und Feinwerksektor.

*Herstellung und Herkunft der Komponenten*

1. Polyphenylenether

Die Polyphenylenether erhielt man durch oxidative Kupplung von 2,6-Dimethylphenol, Abstoppung der Reaktion bei dem gewünschten J-Wert und anschliessende Reaktionsextraktion gemäss DE-A-33 13 864 und DE-A-33 32 377.

1.1 PPE

Entsprechend der allgemeinen Arbeitsvorschrift wurde ein Polyphenylenether mit einem J-Wert von 55 ml/g (bestimmt in Chloroform nach DIN 53 728) hergestellt. Das Lösemittel wurde durch Abdampfen entfernt und die Schmelze über einen Entgasungsextruder extrudiert und anschliessend granuliert.

1.2 PPE:HIPS Blend 55:45

Einen Polyphenylenether mit einem J-Wert von 50 ml/g (bestimmt in Chloroform nach DIN 53 728) erhielt man durch oxidative Kupplung von 2,6-Dimethylphenol, Abstoppung der Reaktion und anschliessender Reaktionsextraktion gemäss DE-A-33 13 864 und DE-A-33 32 377. Gemäss DE-A-33 37 629 wurde eine Mischung dieses Polyphenylenethers und kautschukmodifiziertem Polystyrol (siehe 2.1 HIPS) im Massenverhältnis 55:45 hergestellt.

2. Styrolpolymerisate (siehe auch 1.2)

2.1 HIPS

Als schlagfestes Styrolpolymerisat wird VESTYRON® 16 der Fa. Chemische Werke Hüls AG, D-4370 Marl 1, eingesetzt. Die Kenndaten dieses Produkts sind der Broschüre «Kunststoffe von Hüls, VESTYRON», Ausgabe September 1979, zu entnehmen.

3. E-SBR-Kautschuk

3.1 Russ:E-SBR 7:10

Ein pulverförmiger E-SBR-Kautschuk (auf Basis von 23,5% Styrol und 76,5% Butadien), der 41% Russ enthielt, wurde gemäss DE-OS 28 22 148 erhalten.

3.2 E-SB:E-SBR 60:40

Man verwendete eine Polymermischung aus 60 Massenteilen eines Styrol-Butadien-Copolymerisats (85 Massenteile Styrol und 15 Massenteile Butadien) und 40 Massenteilen eines E-SBR-Kautschuks (Styrol:Butadien-Verhältnis von 23,5:76,5). Beide Bestandteile wurden in bekannter Weise durch radikalische Emulsionspolymerisation gewonnen.

4. Styrol-Butadien-Emulsionspolymerisate (siehe auch 3.2)

4.1 E-SB

Man verwendete ein Emulsionspolymerisat aus 85 Massenteilen Styrol und 15 Massenteilen Butadien.

5. Zusatzstoffe 5.1

Didecylphenylphosphit

5.2

Octadecyl-3-(3,5-di-tert.-butyl-4-hydroxyphenyl)-propionat

5.3

Oxidiertes Polyethylenwachs mit einem Molekulargewicht von 1500. Ein solches Produkt ist in bekannter Weise durch Oxidation von Polyethylen erhältlich. Es ist unter dem Namen VESTOWAX® AO 1539 auch im Handel erhältlich (Hersteller: Chemische Werke Hüls AG, D-4370 Marl 1).

*Herstellung und Prüfung der Polymermischungen*

Für die Fertigung der schlagzähen polymeren Mischungen benutzt man einen ZSK 30 Doppelschneckenkneter der Fa. Werner und Pfleiderer mit Förder-, Knet- und Entgasungszonen.

Die Bestandteile werden mechanisch gemischt und in dem genannten Gerät umgeschmolzen, wobei einheitlich eine Zylindertemperatur von 230° C und eine Schneckendrehzahl von 250 min⁻¹ verwendet wird. Die austretenden Schmelzstränge werden nach üblichen Verfahren granuliert. Man trocknet sie bei 110°C bis zu einer Feuchte von weniger als 0,05%.

Für die Bestimmung der Kerbschlagzähigkeit nach DIN 53 453 verarbeitet man das Granulat auf einer Spitzgussmaschine bei einer Zylindertemperatur von 240 bis 260° C und einer Werkzeugtemperatur von 90°C zu Normkleinstäben.

Die Vicat-Erweichungstemperatur nach DIN 53 460 bestimmt man an 4 mm dicken Pressplatten, die man bei 250° C hergestellt hat.

*(Tabelle am Ende des Patents)*

**Patentansprüche**

1. Thermoplastische Massen auf Basis von Polyphenylenethern, E-SBR-Kautschuken und Styrolharzen,
dadurch gekennzeichnet,
dass sie aus
A 15 bis 95 Massenteilen Polyphenylenether
B 0 bis 70 Massenteilen Styrolhomopolymerisate und/oder schlagzähe Styrolpolymerisate mit einem mittleren Durchmesser (Volumenmittel) der Teilchen in der elastomeren Gelphase zwischen 1 und 5 µm
C 3 bis 15 Massenteilen E-SBR-Kautschuken, mit einem Gewichtsanteil Styrol von 15 bis 40%
D 3 bis 15 Massenteilen Styrol-Butadien-Emulsionspolymerisaten mit einem Gewichtsanteil Styrol von 80 bis 95% und
E gegebenenfalls weiteren Zusatzstoffen bestehen.

2. Thermoplastische Massen nach Anspruch 1,
dadurch gekennzeichnet,
dass die Komponente A ein Polymeres des 2,6-Dimethylphenols ist.

3. Thermoplastische Massen nach Anspruch 2,
dadurch gekennzeichnet,
dass das Polymere A eine Viskositätszahl von 40 bis 65 ml/g aufweist.

4. Thermoplastische Massen nach den Ansprüchen 1 bis 3,
dadurch gekennzeichnet,
dass die Komponente B ein mit Poly-cis-butadien schlagzäh gemachtes Styrolpolymerisat ist.

5. Thermoplastische Massen nach den Ansprüchen 1 bis 4,
dadurch gekennzeichnet,
dass die Komponente C ein pulverförmiger, füllstoffhaltiger Kautschuk ist.

6. Thermoplastische Massen nach den Ansprüchen 1 bis 5,
dadurch gekennzeichnet,
dass die Komponente D einen Styrol-Gewichtsanteil von 82 bis 90% aufweist.

7. Thermoplastische Massen nach den Ansprüchen 1 bis 6,
dadurch gekennzeichnet,
dass sie
25 bis 90 Massenteile Komponente A,
0 bis 70 Massenteile Komponente B,
6 bis 12 Massenteile Komponente C und
6 bis 12 Massenteile Komponente D
enthalten.

8. Verfahren zur Herstellung der thermoplastischen Massen nach den Ansprüchen 1 bis 7,
dadurch gekennzeichnet,
dass man die Komponenten A, B, C und D und gegebenenfalls die Zusatzstoffe E aufschmilzt und vermischt.

**Claims**

1. A thermoplastic composition based on a polyphenylene ether, an E-SBR rubber and a styrene resin, characterized in that it comprises
A 15 to 95 parts by weight of polyphenylene ether,
B 0 to 70 parts by weight of styrene homopolymer and/or toughened styrene polymer having a mean diameter (volume average) of the particles in the elastomeric gel phase of from 1 to 5 µm,
C 3 to 15 parts by weight of E-SBR rubber containing from 15 to 40% by weight of styrene,
D 3 to 15 parts by weight of styrene-butadiene emulsion polymer containing from 80 to 95% by weight of styrene and
E if desired, further additive(s).

2. A thermoplastic composition according to Claim 1, characterized in that component A is a polymer of 2,6-dimethylphenol.

3. A thermoplastic composition according to Claim 2, characterized in that polymer A has a viscosity number of from 40 to 65 ml/g.

4. A thermoplastic composition according to any of Claims 1 to 4, characterized in that component B is a styrene polymer toughened with poly-cis-butadiene.

5. A thermoplastic composition according to any of Claims 1 to 4, characterized in that component C is a pulverulent, filled rubber.

6. A thermoplastic composition according to any of Claims 1 to 5, characterized in that component D contains from 82 to 90% by weight of styrene.

7. A thermoplastic composition according to any of Claims 1 to 6, characterized in that it contains
25 to 90 parts by weight of component A,
 0 to 70 parts by weight of component B,
 6 to 12 parts by weight of component C and
 6 to 12 parts by weight of component D.

8. A process for the preparation of a thermoplastic composition as claimed in any of Claims 1 to 7, characterized in that components A, B, C and D and, if desired, additive(s) E, are melted and mixed.

**Revendications**

1. Masses thermoplastiques à base d'éthers polyphényléniques, de caoutchoucs E-SBR et de résines de styrène, caractérisées par le fait qu'elles sont constituées par:

A  15 à 95 parties en masse d'éther polyphénylénique,

B  0 à 70 parties en masse de produits d'homopolymérisation du styrène et/ou de produits de polymérisation du styrène résistant aux chocs avec un diamètre moyen (moyenne volumique) des particules dans la phase élastomère gélifiée compris entre 1 et 5 μm,

C  3 à 15 parties en masse de caoutchouc E-SBR, avec une fraction de styrène de 15 à 40% en poids,

D  3 à 15 parties en masse de produits de polymérisation en émulsion de styrène et de butadiène, avec une fraction de styrène de 80 à 95% en poids, et

E  éventuellement d'autres additifs.

2. Masses thermoplastiques selon la revendication 1, caractérisées par le fait que le composant A est un polymère du 2,6-diméthyl-phénol.

3. Masses thermoplastiques selon la revendication 2, caractérisées par le fait que le polymère A présente un indice de viscosité de 40 à 65 ml/g.

4. Masses thermoplastiques selon les revendications 1 à 3, caractérisée par le fait que le composant B est un produit de polymérisation du styrène rendu résistant aux chocs avec du cis polybutadiène.

5. Masses thermoplastiques selon les revendications 1 à 4, caractérisées par le fait que le composant C est un caoutchouc pulvérulent renfermant des charges.

6. Masses thermoplastiques selon les revendications 1 à 5, caractérisées par le fait que le composant D présente une fraction de styrène de 82 à 90% en poids.

7. Masses thermoplastiques selon les revendications 1 à 6, caractérisées par le fait qu'elles renferment:

de 25 à 90 parties en masse du composant A,
de  0 à 70 parties en masse du composant B,
de  6 à 12 parties en masse du composant C, et
de  6 à 12 parties en masse du composant D.

8. Procédé de préparation des masses thermoplastiques selon les revendications 1 à 7, caractérisé par le fait qu'on fait fondre les composants A, B, C et D, et éventuellement les additifs E, puis qu'on les mélange.

*Tabelle*

| Bsp. Nr. | Einsatzstoffe[1] | | | | | | Polymerzusammensetzungen[2] | | | | | Eigenschaften | | |
|---|---|---|---|---|---|---|---|---|---|---|---|---|---|---|
| | PPE | PPE:HIPS Blend 55:45 | HIPS | E-SB | E-SB:E-SBR 60:40 | Russ:E-SBR 7:10 | PPE | HIPS | E-SB | E-SBR | Russ | Kerbschlag-zähigkeit DIN 53 453 (kJ/m²) | Vicaterweichungs-temperatur DIN 53 460 (°C) | |
| | | | | | | | | | | | | | A | B |
| A | 0 | 62 | 38 | 0 | 0 | 0 | 33,9 | 65,9 | 0 | 0 | 0 | 9,7 | 128 | 120 |
| B | 0 | 62 | 23 | 15 | 0 | 0 | 33,9 | 50,9 | 15 | 0 | 0 | 9,9 | 126 | 114 |
| C | 0 | 62 | 33 | 0 | 0 | 8,5 | 33,9 | 60,9 | 0 | 5 | 3,5 | 11,9 | 130 | 121 |
| 11 | 0 | 62 | 25,5 | 7,5 | 0 | 8,5 | 33,9 | 53,4 | 7,5 | 5 | 3,5 | 13,2 | 128 | 118 |
| 12 | 0 | 62 | 29,25 | 0 | 6,25 | 4,25 | 33,9 | 57,15 | 3,75 | 5 | 1,75 | 13,6 | 131 | 124 |
| 13 | 0 | 62 | 25,5 | 0 | 12,5 | 0 | 33,9 | 53,4 | 7,5 | 5 | 0 | 13,9 | 128 | 117 |
| D | 0 | 62 | 28 | 0 | 0 | 17 | 33,9 | 55,9 | 0 | 10 | 7 | 12,5 | 131 | 121 |
| 14 | 0 | 62 | 13 | 15 | 0 | 17 | 33,9 | 40,9 | 15 | 10 | 7 | 16,0 | 129 | 116 |
| 15 | 0 | 62 | 20,5 | 0 | 12,5 | 8,5 | 33,9 | 48,4 | 7,5 | 10 | 3,5 | 16,3 | 129 | 116 |
| 16 | 0 | 62 | 13 | 0 | 25 | 0 | 33,9 | 40,9 | 15 | 10 | 0 | 18,1 | 127 | 115 |
| E | 100 | 0 | 0 | 0 | 0 | 0 | 100 | 0 | 0 | 0 | 0 | 7 | 205 | 195 |
| F | 100 | 0 | 0 | 20 | 0 | 0 | 83,3 | 0 | 16,7 | 0 | 0 | 6 | 165 | 158 |
| G | 100 | 0 | 0 | 0 | 0 | 20 | 89,5 | 0 | 0 | 10,5 | 7,3 | 10 | 206 | 195 |
| 17 | 100 | 0 | 0 | 0 | 20 | 0 | 83,3 | 0 | 10,0 | 6,7 | 0 | 16 | 187 | 165 |

[1] Alle Mischungen enthalten zusätzlich, bezogen auf 100 Massenteile der Summe von PPE und HIPS, 0,5 Massenteile der Komponente 5.1, 0,5 Massenteile der Komponente 5.2 sowie 1,5 Massenteile der Komponente 5.3.

[2] Die Polymerzusammensetzungen sind zu Vergleichszwecken in der Weise angegeben, dass sich die Mengenanteile PPE, HIPS, E-SB und E-SBR gerade zu 100 addieren.